# EUROPÄISCHE PATENTSCHRIFT

(11) **EP 3 365 648 B1**
(45) Veröffentlichungstag und Bekanntmachung des Hinweises auf die Patenterteilung: **11.08.2021**
(21) Anmeldenummer: 16763273.6
(22) Anmeldetag: 12.09.2016
(51) Int. Cl.: G01L 19/14, G01L 19/04

(54) **DRUCKMESSEINRICHTUNG**
PRESSURE MEASURING DEVICE
DISPOSITIF DE MESURE DE PRESSION

(30) Priorität: 19.10.2015 DE 102015117736
(43) Veröffentlichungstag der Anmeldung: 29.08.2018
(73) Patentinhaber: Endress+Hauser SE+Co. KG, 79689 Maulburg (DE)
(72) Erfinder: SIXTENSSON, Daniel, 14469 Potsdam (DE); HAKER, Fred, 14532 Kleinmachnow (DE); MÜLLER, Dennis, 14550 Gross Kreutz / OT (DE); GUTH, Andreas, 14532 Stahnsdorf (DE); ZIERMANN, Rene, 14532 Kleinmachnow (DE)
(74) Vertreter: Andres, Angelika Maria
(86) Internationale Anmeldenummer: PCT/EP2016/071395
(87) Internationale Veröffentlichungsnummer: WO 2017/067707

(56) Entgegenhaltungen:
- WO-A1-94/05988
- US-A- 5 049 421
- US-A1- 2006 213 276

## Beschreibung

Die Erfindung betrifft eine Druckmesseinrichtung mit einem Träger, insb. einem Träger aus Metall, insb. aus Edelstahl, einem mit dem Träger verbundenen Sockel und einem auf einem frei stehenden Ende des Sockels montierten Drucksensor.

Druckmesseinrichtungen dienen zur messtechnischen Erfassung von Drücken, insb. von Absolutdrücken, Relativdrücken und Differenzdrücken, und werden in der industriellen Messtechnik verwendet.

In der Druckmesstechnik werden häufig so genannte Halbleiter-Drucksensoren eingesetzt. Halbleiter-Sensoren werden heute regelmäßig auf Siliziumbasis, z.B. unter Verwendung von Silicon-on-Insulator (SOI) Technologie hergestellt. Sie sind z.B. als Drucksensor-Chips ausgebildet, die typischer Weise einen Membranträger und eine auf dem Membranträger angeordnete Messmembran aufweisen.

Diese Drucksensoren sind sehr empfindlich und werden deshalb in ein in der Regel metallisches Gehäuse eingesetzt und über vorgeschaltete mit einer Druck übertragenden Flüssigkeit gefüllte Druckmittler mit dem zu messenden Druck beaufschlagt. Gehäuse und Drucksensor bestehen somit aus Materialien, die sehr unterschiedliche thermische Ausdehnungskoeffizienten aufweisen. Aufgrund der für die Sensormontage erforderlichen mechanischen Verbindung zwischen Gehäuse und Drucksensor können daher thermomechanische Spannungen auftreten, die sich auf das Übertragungsverhalten der Messmembran auswirken und damit die erzielbare Messgenauigkeit und deren Reproduzierbarkeit verschlechtern. Dies gilt insb. für eine temperaturabhängige Hysterese der Messergebnisse.

Zur Reduktion temperaturabhängiger auf den Drucksensor einwirkender Spannungen ist in der DE 10 2007 052 364 A1 beschrieben, den Drucksensor-Chip auf einer keramischen Zwischenschicht anzuordnen, die einen an den thermischen Ausdehnungskoeffizienten des Halbleitermaterials des Drucksensors angepassten thermischen Ausdehnungskoeffizienten aufweist. Die Zwischenschicht ist über eine mit einem elastischen Kleber ausgeführte Klebung unmittelbar auf einen metallischen Träger des Gehäuse aufgeklebt. Als Material für den Träger ist Kovar angegeben. Kovar weist einen thermischen Ausdehnungskoeffizienten von 6 ppm/K auf und liegt damit deutlich näher am thermischen Ausdehnungskoeffizienten von für Drucksensoren verwendetem Silizium von 2, 6 ppm/K als gängigere und deutlich kostengünstigere Gehäusematerialien, wie z.B. Edelstahl mit einen thermischen Ausdehnungskoeffizienten von 16 ppm/K.

Bei den beschriebenen Druckmesseinrichtungen weist die keramische Zwischenschicht eine Grundfläche auf, die größer als die Grundfläche des darauf angeordneten Drucksensors ist. Letzteres hat zur Folge, dass trotz des vergleichsweise gut angepassten thermischen Ausdehnungskoeffizienten der Zwischenschicht entstehende thermomechanische Spannungen über die gesamte Grundfläche des Drucksensors auf den Drucksensor einwirken.

Als Alternative hierzu sind aus dem Stand der Technik hierzu komplementäre Lösungsansätze bekannt, bei denen eine Reduktion temperaturabhängiger auf den Drucksensor einwirkender Spannungen dadurch erzielt wird, dass der Drucksensor auf einem frei stehenden Ende eines Sockels angeordnet wird, dessen Grundfläche deutlich kleiner als die Grundfläche des darauf montierten Drucksensors ist. Hierzu sind zwei verschiedene Ausführungsformen bekannt, die z.B. in der DE 34 36 440 A1 beschrieben sind. Bei einer Ausführungsform ist der Sockel integraler Bestandteil des metallischen Trägers des Gehäuse und besteht aus dem Material des Gehäuses. Bei der zweiten Ausführungsform ist der Sockel als separates stab- oder rohrförmige Bauteil ausgebildet, das mittels einer Einglasung in eine Bohrung im Träger eingesetzt ist. Die Einglasung bietet den Vorteil, dass sie eine elektrische Isolation des Drucksensors gegenüber dem Gehäuse bewirkt. Allerdings sind die Materialkombinationen von Sockel- und Trägermaterial, zwischen denen hermetisch dichte Einglasungen erzeugt werden können begrenzt.

Weitere Druckmesseinrichtungen der Art sind aus den Dokumenten WO 94/05988 A1 und US5049421 A bekannt.

Darüber hinaus ist auch in der am 22.12.2014 angemeldeten Deutschen Patentanmeldung der Anmelderin mit dem Aktenzeichen 10 2014 119396.2 eine Druckmesseinrichtung beschrieben, die einen auf einem frei stehenden Ende eines Sockels montierten Drucksensor umfasst. Auch bei dieser Druckmesseinrichtung ist der Sockel als separates stab- oder rohrförmiges Bauteil ausgebildet, dessen Grundfläche kleiner als die Grundfläche des darauf montierten Drucksensors ist. Im Unterschied zum vorgenannten Stand der Technik ist das vom Drucksensor abgewandte Ende des Sockels hier jedoch mittels einer Klebung in eine Ausnehmung in einem Träger eingeklebt. Klebungen sind deutlich elastischer als starre Verbindungen, wie zum Beispiel Einglasungen, und somit viel besser in der Lage aufgrund unterschiedlicher thermischer Ausdehnungskoeffizienten von Träger und Sockel entstehende Spannungen auszugleichen. Darüber hinaus bieten Klebungen den Vorteil, dass hierdurch eine große Vielfalt an Materialkombinationen von Sockel- und Trägermaterial miteinander verbunden werden können. Hierdurch ist es möglich, für den Träger einen druckfesten, kostengünstigen Werkstoff, wie zum Beispiel Edelstahl, einzusetzen, und den Werkstoff des Sockels im Hinblick auf die speziellen Anforderungen an die Druckmesseinrichtung aus einer Vielzahl unterschiedlicher Werkstoffe auszuwählen.

Je kleiner die Grundfläche des stab- oder rohrförmigen Sockels ist, umso schwieriger ist es jedoch, den Kleber in ausreichend genauer Dosierung in die entsprechend kleine Ausnehmung einzubringen. Darüber hinaus erfordert die präzise Ausrichtung stab- oder rohrförmiger Sockel sowohl beim Einsetzen in die Ausnehmung, als auch während der Ausführung der Klebung umso mehr Sorgfalt, je kleiner die Grundfläche des Sockels im Verhältnis zu dessen Länge ist.

Es ist eine Aufgabe der Erfindung eine Druckmesseinrichtung mit einem vor thermomechanischen Spannungen geschützten Drucksensor anzugeben, der die vorgenannten Nachteile überwindet.

Hierzu umfasst die Erfindung eine Druckmesseinrichtung, mit
- einem Träger, insb. einem Träger aus Metall, insb. aus Edelstahl,
- einem mit dem Träger verbundenen Sockel, und
- einem auf einem frei stehenden Ende des Sockels montierten Drucksensor,
die sich dadurch auszeichnet, dass
- der Sockel eine auf dem Träger angeordnete Basis umfasst,
- der Sockel einen sich von der Basis in Richtung des Drucksensors erstreckenden, das frei stehende Ende des Sockels umfassenden Fortsatz umfasst,
- die Basis eine Grundfläche aufweist, die größer als eine Grundfläche des Fortsatzes ist, und
- der Fortsatz eine Grundfläche aufweist, die kleiner als eine Grundfläche des darauf montierten Drucksensors ist.

Eine erste Ausgestaltung sieht vor, dass
- eine dem Träger zugewandte Stirnfläche des Sockels, insb. eine dem Träger zugewandte Stirnfläche der Basis oder eine dem Träger zugewandte Stirnfläche eines an die Basis angrenzenden zweiten Fortsatzes des Sockels, mittels einer Fügung mit einer dem Sockel zugewandten Stirnfläche des Trägers, insb. einer Bodenfläche einer Ausnehmung im Träger, verbunden ist, und
- eine dem Drucksensor zugewandte Stirnfläche des Fortsatzes mittels einer Fügung mit einer dem Sockel zugewandten Stirnfläche des Drucksensors verbunden ist.

Eine bevorzugte Ausgestaltung der ersten Ausgestaltung sieht vor, dass mindestens eine der Fügungen, insb. beide Fügungen Klebungen, insb. mit einem Kleber auf Epoxidharzbasis, einem thermoplastischen Kleber oder einem Silikon-Kleber, insb. einem Silikon-Kautschuk, ausgeführte Klebungen, sind.

Eine zweite Ausgestaltung sieht vor, dass die Basis
- im Wesentlichen scheiben- oder ringscheibenförmig ist,
- eine Höhe in der Größenordnung von 0,5 mm bis 10 mm aufweist, und/oder
- eine im Wesentlichen kreisförmige Grundfläche aufweist, deren Außendurchmesser größer als ein Außendurchmesser des Fortsatzes ist und insb. kleiner als 10 mm ist, oder eine im Wesentlichen quadratische oder rechteckige Grundfläche aufweist, deren Seitenlängen größer als ein Außendurchmesser des Fortsatzes sind und insb. kleiner als 10 mm sind.

Eine dritte Ausgestaltung sieht vor, dass
- der Fortsatz rohr- oder stabförmig ist, wobei der Fortsatz insb. eine kreis- oder kreisringförmige Grundfläche, insb. ein Grundfläche mit einen Außendurchmesser im Bereich von 0,5 mm bis 5 mm, aufweist, und
- der Fortsatz eine frei stehende Länge aufweist, die größer gleich einer Mindestlänge von wenigen Zehntelmillimetern ist, und insb. in der Größenordnung von 0,5 mm liegt.

Eine vierte Ausgestaltung sieht vor, dass eine Druckübertragungsleitung vorgesehen ist,
- die durch den Träger und den Sockel hindurch verläuft,
- über die der Drucksensor mit einem Druck oder einem Referenzdruck beaufschlagbar ist, und
- die insb. einen Innendurchmesser im Bereich von 0,25 mm bis 1 mm aufweist.

Eine erste Weiterbildung sieht vor, dass die Basis in eine Ausnehmung im Träger eingesetzt ist.

Eine zweite Weiterbildung sieht vor, dass
- die Basis eine dem Träger zugewandte Stirnfläche aufweist, die mittels einer Fügung mit einer dem Sockel zugewandten Stirnfläche des Trägers, insb. einer Bodenfläche einer im Träger vorgesehenen Ausnehmung, verbunden ist, und
- in der Basis des Sockels auf deren dem Träger zugewandten Seite eine in der Mitte des Sockels angeordnete, zum Träger hin geöffnete Aussparung vorgesehen ist, insb. eine Aussparung, die derart bemessen ist, dass durch sie eine als Fügefläche dienende dem Träger zugewandte Stirnfläche der Basis auf eine für die Erzielung einer ausreichenden Dichtheit und Festigkeit erforderliche Größe reduziert wird.

Eine Weiterbildung der zweiten Weiterbildung sieht vor, dass die Aussparung in einer parallel zur Längsachse des Fortsatzes verlaufenden axialen Richtung eine Höhe von größer gleich 0,2 mm, insb. eine Höhe im Bereich von 0,2 mm bis 0,5 mm, aufweist,

Eine weitere Weiterbildung der zweiten Weiterbildung sieht vor, dass
- die Druckmesseinrichtung als Absolutdruckmesseinrichtung ausgebildet ist, wobei die Aussparung entweder im Wesentlichen kreisscheibenförmig ist und einen Außendurchmesser aufweist, der kleiner gleich der Hälfte eines Außendurchmessers oder einer Seitenlänge der Basis ist, oder eine im Wesentlichen quadratische oder rechteckförmige Grundfläche aufweist, deren Seitenlängen kleiner gleich der Hälfte eines Außendurchmessers oder einer Seitenlänge der Basis sind, oder
- eine durch den Träger und den Sockel hindurch verlaufende Druckübertragungsleitung vorgesehen ist und die Aussparung entweder im Wesentlichen kreisscheibenförmig ist und einen Außendurchmesser aufweist, der kleiner gleich der Hälfte der Summe aus dem Innendurchmesser der Druckübertragungsleitung und dem Außendurchmesser oder der Seitenlänge der Basis ist, oder eine im Wesentlichen quadratische oder rechteckförmige Grundfläche aufweist, deren Seitenlängen kleiner gleich der Hälfte der Summe aus dem Innendurchmesser der Druckübertragungsleitung und dem Außendurchmesser oder der Seitenlänge der Basis sind.

Eine weitere Weiterbildung der Erfindung sieht vor, dass
- ein Hohlraum vorgesehen ist, der eine Fügung zwischen dem Sockel und dem Träger außenseitlich allseitig umgibt,
- wobei der Hohlraum insb. dadurch gebildet ist, dass eine äußere Mantelfläche der Basis zumindest auf deren dem Träger zugewandten Seite eine eine Querschnittsfläche der Basis in Richtung des Trägers verkleinernde, insb. konisch verjüngende, Formgebung aufweist.

Eine dritte Weiterbildung sieht vor, dass
- der Sockel auf dessen vom Drucksensor abgewandten Seite einen an die Basis anschließenden zweiten Fortsatz umfasst,
- im Träger eine Ausnehmung zur Aufnahme des zweiten Fortsatzes vorgesehen ist,
- die Basis auf einer an die Ausnehmung zur Aufnahme des zweiten Fortsatzes angrenzenden Absatzfläche des Trägers aufliegt, und
- Sockel und Träger über eine zwischen der vom Drucksensor abgewandten, dem Träger (5) zugewandten Stirnfläche des zweiten Fortsatzes und der dem Drucksensor zugewandten Bodenfläche der den zweiten Fortsatz aufnehmenden Ausnehmung vorgesehene Fügung miteinander verbunden sind.

Eine fünfte Ausgestaltung sieht vor, dass der Sockel aus Metall, insb. aus Edelstahl, Invar oder Kovar, aus Siliziumcarbid (SiC), oder aus einem Isolator, insb. aus Keramik, insb. aus Aluminiumoxid (Al₂O₃), Siliziumnitrid (Si₃N₄) oder Aluminiumnitrid (AIN), oder aus Glas, insb. aus Borosilikatglas, besteht.

Eine sechste Ausgestaltung sieht vor, dass der Sockel aus einem Werkstoff besteht, der einen an den thermischen Ausdehnungskoeffizienten des Drucksensors angepassten thermischen Ausdehnungskoeffizienten aufweist.

Eine vierte Weiterbildung sieht vor, dass
- die Druckmesseinrichtung eine Differenzdruckmesseinrichtung oder eine Absolut- oder Relativdruckmesseinrichtung zur Messung von höheren Drücken, insb. Drücken von größer gleich 4 MPa ist, und
- der Sockel aus einem Werkstoff, insb. aus Edelstahl, Invar, Kovar oder Keramik, insb. aus Aluminiumoxid (Al₂O₃), Siliziumnitrid (Si₃N₄), Siliziumcarbid (SiC) oder Aluminiumnitrid (AIN), besteht, der einen Elastizitätsmodul von größer gleich 200000 MPa aufweist.

Die erfindungsgemäße Druckmesseinrichtung bieten zusätzlich zu den Vorteilen der in der zuvor genannten am 22.12.2014 angemeldeten Deutschen Patentanmeldung der Anmelderin mit dem Aktenzeichen 10 2014 119396.2 beschriebenen Druckmesseinrichtungen den Vorteil, dass sich die erfindungsgemäßen Sockel aufgrund der deutlich größeren Grundfläche der Basis bei deren Montage automatisch selber ausrichten und auch während der Herstellung der Fügung zwischen Sockel und Träger selbsttätig in dieser Ausrichtung verbleiben. Die erfindungsgemäßen Sockel können somit auf sehr einfache Weise mit hoher Präzision montiert werden.

Die Erfindung und deren Vorteile werden nun anhand der Figuren der Zeichnung, in denen drei Ausführungsbeispiele dargestellt sind, näher erläutert. Gleiche Elemente sind in den

Figuren mit den gleichen Bezugszeichen versehen.
- Fig. 1 zeigt:: eine erfindungsgemäße Druckmesseinrichtung; und
- Fig. 2 zeigt:: eine Weiterentwicklung der Druckmesseinrichtung von Fig. 1 mit einer in der Basis vorgesehenen Ausnehmung;; und
- Fig. 3 zeigt:: eine Weiterentwicklung der Druckmesseinrichtung von Fig. 1 mit einem auf der vom Drucksensor abgewandten Seite der Basis angeformten zweiten Fortsatz.

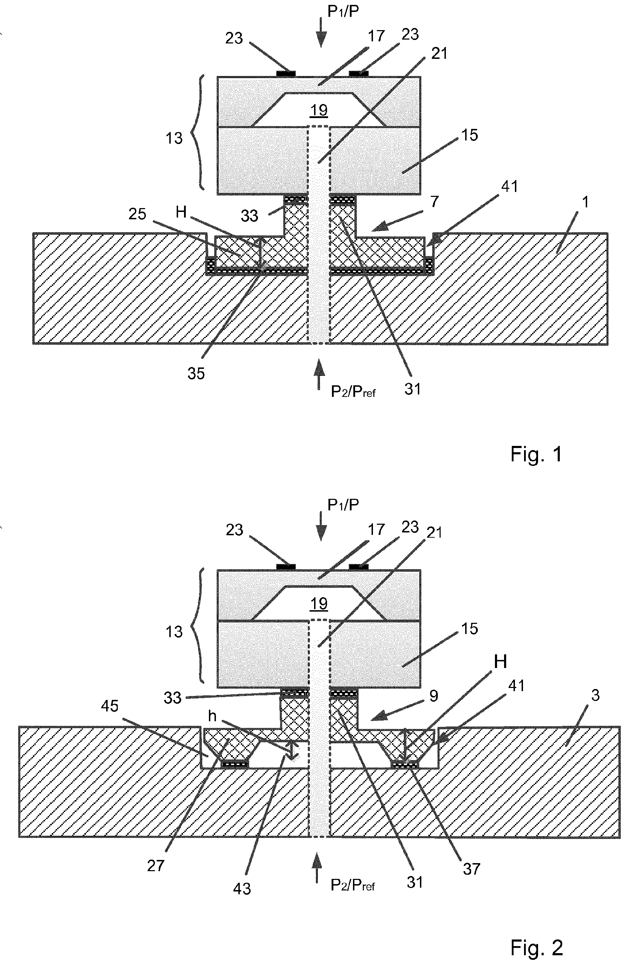

In den Figuren 1 bis 3 ist jeweils eine erfindungsgemäße Druckmesseinrichtung dargestellt. Alle dargestellten Druckmesseinrichtungen umfassen jeweils einen Träger 1, 3, 5, einen mit dem Träger 1, 3 bzw. 5 verbundenen Sockel 7. 9 bzw. 11 und einen auf einem frei stehenden Ende des Sockels 7, 9, bzw. 11 montierten Drucksensor 13. Die Drucksensoren 13 sind sogenannte Halbleiter-Drucksensoren, z.B. auf Siliziumbasis hergestellte Drucksensor-Chip, und weisen beispielsweise einen Membranträger 15 und eine darauf angeordnete Messmembran 17 auf, unter der eine Druckkammer 19 eingeschlossen ist. Die Druckmesseinrichtungen können jeweils als Differenzdruck-, als Relativdruck- oder als Absolutdruckmesseinrichtung ausgestaltet sein.

Zur Erfassung von Differenzdrücken wird eine erste Seite der Messmembran 17 mit einem ersten Druck p₁ beaufschlagt und deren zweite Seite über eine durch den Träger 1, 3 bzw. 5 den Sockel 7, 9 bzw. 11 und den Membranträger 15 hindurch verlaufende, in der Druckkammer 19 mündende - in Fig. 1 gestrichelt dargestellte - Druckübertragungsleitung 21 mit einem zweiten Druck p₂ beaufschlagt. Bei dieser Ausführungsform bewirkt die auf die Messmembran 17 einwirkende Druckdifferenz zwischen dem ersten und dem zweiten Druck p₁, p₂ eine vom zu messenden Differenzdruck Δp abhängige Auslenkung der Messmembran 17.

Zur Erfassung von Relativdrücken wird die erste Seite der Messmembran 17 mit dem zu messenden Druck p beaufschlagt und der zweiten Seite der Messmembran 17 wird anstelle des zweiten Drucks p₂ ein Referenzdruck p_{ref}, z.B. ein Umgebungsdruck, zugeführt, bezogen auf den der auf die erste Seite einwirkende Druck p gemessen werden soll. Bei dieser Ausführungsform bewirkt die auf die Messmembran 17 einwirkende Druckdifferenz zwischen dem Druck p und dem Referenzdruck p_{ref} eine vom zu messenden Relativdruck abhängige Auslenkung der Messmembran 17.

Sowohl bei der als Differenzdruckmesseinrichtung als auch bei der als Relativdruckmesseinrichtung ausgebildeten Druckmesseinrichtung weist die Druckübertragungsleitung 21 vorzugsweise einen Innendurchmesser in der Größenordnung von 0,25 mm bis 1 mm auf.

Zur Erfassung von Absolutdrücken ist die unter der Messmembran 17 eingeschlossene Druckkammer 19 evakuiert und durch die Messmembran 17 und den Membranträger 15 vollständig nach außen abgeschlossen. In dem Fall entfällt die durch den Träger 1,3 bzw. 5 den Sockel 7, 9 bzw. 11 und den Membranträger 15 hindurch verlaufende, in der Druckkammer 19 mündende Druckübertragungsleitung 21 und der auf die erste Seite der Messmembran 17 einwirkende Druck p bewirkt eine vom zu messenden Absolutdruck abhängige Auslenkung der Messmembran 17.

Die resultierende Auslenkung der Messmembran 17 wird in allen drei Fällen mittels eines elektromechanischen Wandlers erfasst und in ein elektrisches Ausgangssignal umgewandelt, das dann für eine weitere Verarbeitung und/oder Auswertung zur Verfügung steht. Als Wandler kann z.B. ein piezoresistiver Wandler eingesetzt werden, der auf oder in der Messmembran 17 angeordnete Sensorelemente 23, z.B. zu einer Widerstandsmessbrücke zusammengeschaltete piezoresistive Elemente, umfasst.

Erfindungsgemäße Druckmesseinrichtungen zeichnen sich dadurch aus, dass deren Sockel 7, 9 bzw. 11 eine auf dem Träger 1, 3 bzw. 5 angeordnete Basis 25, 27 bzw. 29 und einen sich von der Basis 25, 27 bzw. 29 in Richtung des Drucksensors 13 erstreckenden Fortsatz 31 umfassen. Dabei umfasst der Fortsatz 31 das frei stehende Ende des Sockels 7, 9 bzw. 11 auf dem der Drucksensor 13 montiert ist.

Zur Erfassung von Absolutdrücken ist der Fortsatz 31 vorzugsweise stabförmig, und die Basis 25, 27 bzw. 29 weist eine im Wesentlichen scheibenförmige Geometrie auf. Zur Erfassung von Relativ- oder Differenzdrücken ist der Fortsatz 31 vorzugsweise rohrförmig und die Basis 25, 27 bzw. 29 weist eine im Wesentlichen ringscheibenförmige Geometrie auf.

Der Fortsatz 31 des Sockels 7, 9 11 weist eine dem Drucksensor 13 zugewandte Stirnfläche auf, die mit einer dem Sockel 7, 9, 11 zugewandten Stirnfläche des Drucksensors 13 mittels einer Fügung 33 verbunden ist.

Das dem Drucksensor 13 zugewandte Ende des Fortsatzes 31 weist eine Grundfläche auf, die kleiner als die Grundfläche des Drucksensors 13 ist. Halbleiter-Drucksensoren weisen regelmäßig eine, in der Regel quadratische Grundfläche, auf, deren Größe je nach Messbereich und Messempfindlichkeit in der Größenordnung von 1 mm² bis 100 mm² liegt. Demgegenüber weist der Fortsatz 31 vorzugweise eine kreis- oder kreisringförmige Grundfläche auf. Der Außendurchmesser des Fortsatzes 31 liegt je nach Größer der Grundfläche des Drucksensors 13 vorzugsweise im Bereich von 0,5 mm bis 5 mm. Bei einem stabförmigen Fortsatz 31 entspricht das einer Grundfläche in der Größenordnung von ca. 0,2 mm² bis 20 mm².

Dabei weist der stab- oder rohrförmige Fortsatz 31 vorzugsweise eine frei stehende Länge auf, die größer gleich einer Mindestlänge von wenigen Zehntelmillimetern ist. So kann der Fortsatz 31 z.B. eine Länge in der Größenordnung von 0,5 mm aufweisen.

Über diese Geometrie, insb. die im Verhältnis zur Grundfläche des Drucksensors 13 geringe Grundfläche der Fügung 33, wird eine Entkopplung von Messmembran 17 und Träger 1, 3 bzw. 5 bewirkt, die den Drucksensor 13 vor thermomechanischen Spannungen schützt.

Bei den erfindungsgemäße Druckmesseinrichtungen weist die Basis 25, 27 bzw. 29 eine Grundfläche auf, die größer, vorzugsweise deutlich größer, als die Grundfläche des Fortsatzes 31 ist. Ist die Basis 25, 27 bzw. 29 im Wesentlichen kreis- oder kreisringscheibenförmig, so weist sie einen Außendurchmesser auf, der größer als der Außendurchmesser des Fortsatzes 31 ist und vorzugsweise kleiner als 10 mm ist. Weist die Basis 25, 27 bzw. 29 eine im Wesentlichen rechteckförmige oder quadratische Grundfläche, so sind deren Seitenlängen entsprechend größer als der Außendurchmesser des Fortsatzes 31 und vorzugsweise kleiner als 10 mm. Dabei weist die Basis 25, 27 bzw. 29 eine, bei der hier dargestellten im Wesentlichen scheiben- oder ringscheibenförmigen Geometrie durch deren Scheibendicke gegebene Höhe H auf, die vorzugsweise größer gleich 0,5 mm ist und kleiner gleich 10 mm ist.

Die Sockel 7, 9 bzw. 11 der dargestellten Druckmesseinrichtungen weisen jeweils eine dem Träger 1, 3 bzw. 5 zugewandte Stirnfläche auf, die mit einer dem Sockel 7, 9 bzw. 11 zugewandten Stirnfläche des Trägers 1, 3 bzw. 5 mittels einer Fügung 35, 37 bzw. 39 verbunden ist.

Grundsätzlich können sowohl zur Herstellung der Fügung 33 zwischen Sockel 7, 9 bzw. 11 und Drucksensor 13 als auch zur Herstellung der Fügung 35, 37 bzw. 39 zwischen Sockel 7, 9 bzw. 11 und Träger 1, 3 bzw. 5 aus der Mikrosystemtechnik bekannte Fügeverfahren, wie z.B. Weichlötverfahren oder Glaslötverfahren eingesetzt werden.

Vorzugsweise ist mindestens eine der beiden Fügungen 33, 35, 37 bzw. 39 eine Klebung. In einer besonders bevorzugten Ausführungsform sind beide Fügungen 33 und 35, 37 bzw. 39 Klebungen. Zur Herstellung der Klebungen eignen sich insb. Kleber auf Epoxidharzbasis, thermoplastische Kleber oder Silikon-Kleber, wie zum Beispiel Silikon-Kautschuk.

Bei den erfindungsgemäßen Druckmesseinrichtungen bewirkt die im Vergleich zur Grundfläche des Fortsatzes 31 sehr große Grundfläche der Basis 25, 27 bzw. 29, sowie der durch die Basis 25, 27 bzw. 29 in Richtung des Trägers 1, 3 bzw. 5 verschobene Schwerpunkts des Sockels 7, 9 bzw. 11, dass der Sockel 7, 9 bzw. 11 beim Aufsetzen des Sockels 7, 9 bzw. 11 auf dem Träger 1, 3 bzw. 5 automatisch eine Ausrichtung einnimmt, bei der die dem Träger 1, 3 bzw. 5 zugewandte Stirnfläche der Basis 25, 27 bzw. 29 im Wesentlichen parallel zur Stirnfläche des Trägers 1, 3 bzw. 5 verläuft auf die die Basis 25, 27 bzw. 29 aufgesetzt wird. Diese Ausrichtung bleibt auch während der Ausführung eines zur Herstellung der Fügung 35, 37 bzw. 39 zwischen Sockel 7, 9 bzw. 11 und Träger 1, 3 bzw. 5 eingesetzten Fügeverfahrens stabil. Es sind somit weder während des Ein- bzw. Aufsetzens des Sockels 7, 9 bzw. 11, noch während des Fügeverfahrens besondere Maßnahmen zur Ausrichtung des Sockels 7, 9 bzw. 11 erforderlich.

Die Sockel 7, 9 bzw. 11 können manuell oder maschinell auf dem Träger 1, 3 bzw. 5 angeordnet werden. Beim maschinellen Anordnen bietet die vergleichsweise große Grundfläche der Basis 25, 27 bzw. 29 den Vorteil, dass die Sockel 7, 9 bzw. 11 mittels eines Bestückungsautomaten leichter angesaugt werden können und im angesaugten Zustand sicherer transportiert und anschließend platziert werden können.

Grundsätzlich kann die Basis 25, 27 bzw. 29 des Sockels 7, 9 bzw. 11 unmittelbar auf einer planaren äußeren Stirnfläche des Trägers 1 angeordnet werden. Vorzugsweise weist der Träger 1, 3 bzw. 5 jedoch auf dessen dem Drucksensor 13 zugewandten Seite eine Ausnehmung 41 auf, in die die Basis 25, 27 bzw. 29 des Sockels 7, 9 bzw. 11 eingesetzt wird.

Das Einsetzen der Basis 25, 27 bzw. 29 in die Ausnehmung 41 bietet den Vorteil einer insgesamt kleineren und kompakteren Bauform. In dem die Basis 25, 27 bzw. 29 im Träger 1, 3 bzw. 5 versenkt angeordnet wird, wird erreicht, dass ein Innenraum eines - hier nicht dargestellten - Gehäuse, in das der auf dem Träger 1, 3 bzw. 5 montierte Drucksensor 13 eingebracht wird, deutlich kleiner sein kann, als er sein müsste, wenn er auch die Basis 25, 27 bzw. 29 aufnehmen müsste. Hierdurch verringert sich das Volumen an Druck übertragender Flüssigkeit, über die die Außenseite der Messmembran 17 im Innenraum des Gehäuses mit dem zu messenden Druck p bzw. dem ersten Druck p₁ beaufschlagt wird.

Bei dem in Fig. 1 dargestellten Ausführungsbeispiel bildet eine dem Sockel 7 zugewandte Bodenfläche der Ausnehmung 41 eine innere Stirnfläche des Trägers 1 über die der Träger 1 mit der dem Träger 1 zugewandten Stirnfläche der Basis 25 über die Fügung 35 verbunden ist. In dem Fall erstreckt sich die Fügung 35 zwischen Sockel 7 und Träger 1 über die der Bodenfläche zugewandte Stirnfläche der Basis 25 des Sockels 7.

Aufgrund der im Vergleich zur Grundfläche des Fortsatzes 31 sehr großen Grundfläche der Basis 25 steht für die Fügung 35 zwischen Sockel 3 und Träger 1 bei dem in Fig. 1 dargestellten Ausführungsbeispiel sockelseitig eine Fügefläche zur Verfügung, die regelmäßig deutlich größer ist, als eine von der Wahl des Fügeverfahrens abhängige, für eine Erzielung einer ausreichenden Dichtheit und Festigkeit erforderliche Mindestfügefläche.

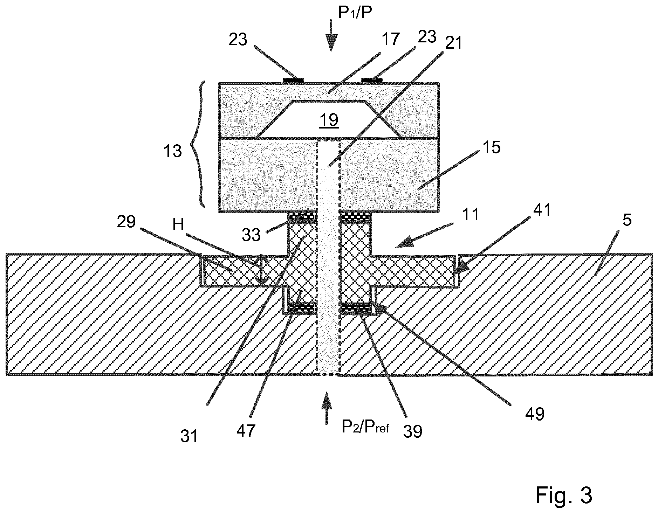

Fig. 2 und 3 zeigen zwei alternative erfindungsgemäße Druckmesseinrichtungen, bei denen die sich die Fügung 37 bzw. 39 zwischen Sockel 9 bzw. 11 und Träger 3 bzw. 5 über eine geringere Fügefläche erstreckt.

Das in Fig. 2 dargestellte Ausführungsbeispiel unterscheidet sich von dem in Fig. 1 dargestellten Ausführungsbeispiel dadurch, dass in der Basis 27 des Sockels 9 auf deren dem Träger 3 zugewandten Seite eine in der Mitte des Sockels 9 angeordnete, zum Träger 3 hin geöffnete Aussparung 43 vorgesehen ist.

Die Aussparung 43 weist eine in axialer - also parallel zur Längsachse des Fortsatzes 31 verlaufender Richtung - vorzugsweise eine Höhe h auf, die je nach Höhe H der Basis 27 in der Größenordnung von 0,2 mm bis 0,5 mm liegt.

Die Aussparung 43 ist vorzugsweise im Wesentlichen kreisscheibenförmig. In dem Fall weist sie in Verbindung mit als Absolutdruckmesseinrichtung ohne Druckübertragungsleitung 21 ausgebildeten Druckmesseinrichtungen vorzugsweise einen Außendurchmesser auf, der kleiner gleich der Hälfte des Außendurchmessers bzw. der Seitenlängen der Basis 27 ist. Demgegenüber weist sie in Verbindung mit Druckmesseinrichtungen mit Druckübertragungsleitung 21 vorzugsweise einen Außendurchmesser auf, der kleiner gleich der Hälfte der Summe aus dem Innendurchmesser der Druckübertragungsleitung 21 und dem Außendurchmesser bzw. der Seitenlänge der Basis 27 ist.

Alternativ kann die Aussparung 43 eine im Wesentlichen quadratische oder rechteckförmige Grundfläche aufweisen. In dem Fall weist deren Grundfläche in Verbindung mit als Absolutdruckmesseinrichtung ohne Druckübertragungsleitung 21 ausgebildeten Druckmesseinrichtungen vorzugsweise Seitenlängen auf, der kleiner gleich der Hälfte des Außendurchmessers bzw. der Seitenlängen der Basis 27 sind. Demgegenüber weist sie in Verbindung Druckmesseinrichtungen mit Druckübertragungsleitung 21 vorzugsweise Seitenlängen auf, der kleiner gleich der Hälfte der Summe aus dem Innendurchmesser der Druckübertragungsleitung 21 und dem Außendurchmesser bzw. der Seitenlänge der Basis 27 sind.

Die Aussparung 43 reduziert die als Fügefläche dienende Stirnfläche der Basis 27. Dabei wird die Grundfläche der Aussparung 43 vorzugsweise derart bemessen, dass die Fügefläche durch die Aussparung 43 auf eine für die Erzielung einer ausreichenden Dichtheit und Festigkeit erforderliche Größe reduziert wird. Das bietet den Vorteil, dass die Fügefläche über die durch unterschiedliche thermische Ausdehnungskoeffizienten von Sockel 9 und Träger 3 bedingte thermomechanische Spannungen über die Fügung 37 auf den Sockel 9 übertragen werden können, reduziert wird. Je kleiner die Fügefläche ist, umso geringer sind die thermomechanische Spannungen, die über die Fügefläche auf den Sockel 9 übertragen werden. Je weniger thermomechanische Spannungen auf den Sockel 9 übertragen werden, umso geringer ist auch deren Einfluss auf die Messeigenschaften des Drucksensors 13.

In den in Fig. 1 und 2 dargestellten Ausführungsbeispielen erstreckt sich die Fügung 35, 37 zwischen Sockel 7 bzw. 9 und Träger 1 bzw. 3 jeweils über die der Bodenfläche der Ausnehmung 41 zugewandte Stirnfläche der Basis 25 bzw. 27. Die als Fügefläche dienende Stirnfläche des in Fig. 2 dargestellten Sockels 9 ist jedoch aufgrund der Aussparung 43 deutlich kleiner als die als Fügefläche dienende Stirnfläche des in Fig. 1 dargestellten Sockels 7.

Bei dem in Fig. 1 dargestellten Ausführungsbeispiel erstreckt sich die vorzugsweise als Klebung ausgebildete Fügung 35 zwischen Sockel 7 und Träger 1 zusätzlich über eine in der Ausnehmung 41 befindliche außenseitliche Mantelfläche der Basis 25. Dieser Fall kann z.B. dadurch eintreten, dass ein während der Verarbeitung flüssiger Kleber, insb. aufgrund von Kapillarkräfte, in den die Basis 25 außenseitlich umgebenden Spalt zwischen Basis 25 und Träger 1 eindringt.

Bei dem in Fig. 2 dargestellten Ausführungsbeispiel bildet die Aussparung 43 einen an die Innenseite Fügung 37 angrenzenden Hohlraum. Dieser Hohlraum bietet den Vorteil, dass er überschüssigen Kleber aufnehmen kann. Überschüssiger Kleber kann z.B. dann anfallen, wenn versehentlich mehr Kleber als benötigt auf die Klebefläche aufgebracht wurde, oder wenn auf die Klebeflächen aufgebrachter Kleber vor oder während des Klebevorgangs aus dem Zwischenraum zwischen dem Träger 3 und der Fügefläche der Basis 27 austritt. Die Aufnahme von überschüssigem Kleber ist insb. in Verbindung mit Druckmesseinrichtungen zur Relativ- oder Differenzdruckmessung vorteilhaft, da sie hier sicherstellt, dass kein Kleber in die Druckübertragungsleitung 21 eindringt.

Vorzugsweise ist, insb. in Verbindung mit in eine Ausnehmung 41 im Träger 1 bzw. 3 eingesetzten Sockeln 7 bzw. 9, ein weiterer Hohlraum 45 vorgesehen, der die Fügung 35 bzw. 37 zwischen Sockel 7 bzw. 9 und Träger 1 bzw. 3 außenseitlich allseitig umgibt. Diese Variante ist in Fig. 2 dargestellt. Dort wird der Hohlraum 45 dadurch erzeugt, dass eine äußere Mantelfläche der Basis 27 zumindest auf deren dem Träger 3 zugewandten Seite eine Querschnittsfläche der Basis 27 in Richtung des Trägers 3 verkleinernde, insb. konisch verjüngende, Formgebung aufweist. Diese Variante ist natürlich auch in Verbindung mit dem in Fig. 1 dargestellten Ausführungsbeispiel einsetzbar.

Bei den in Fig. 1 und 2 dargestellten Ausführungsbeispielen bietet die an die Größe der Grundfläche der Basis 25 bzw. 27 angepasste Größe der Ausnehmung 41 den Vorteil, dass auch dann noch sehr viel Platz für das Einbringen von Kleber zur Verfügung steht, wenn der den Drucksensor 13 tragende Fortsatz 31 nur eine vergleichsweise geringe Grundfläche aufweist. Das erleichtert nicht nur das Einbringen des Klebers in die Ausnehmung 41, sondern auch dessen Dosierung.

Die in Fig. 3 dargestellte erfindungsgemäße Druckmesseinrichtung unterscheidet sich von den in Fig. 1 und 2 dargestellten Ausführungsbeispielen dadurch, dass der Sockel 11 auf dessen vom Drucksensor 13 abgewandten Seite einen an die Basis 29 anschließenden zweiten Fortsatz 47 umfasst. Zusätzlich ist im Träger 5 eine an die Ausnehmung 41 zur Aufnahme der Basis 29 anschließende Ausnehmung 49 zur Aufnahme des zweiten Fortsatzes 47 vorgesehen. Der zweite Fortsatz 47 ist genau wie der erste Fortsatz 31 stab- oder rohrförmig und weist eine Grundflläche auf, die kleiner als die Grundfläche der Basis 29 ist. Entsprechend weist die Ausnehmung 49 zur Aufnahme des zweiten Fortsatzes 49 eine Grundfläche auf, die kleiner als die Grundfläche der die Basis 29 aufnehmenden Ausnehmung 41 im Träger 5 ist. Hierdurch entsteht im Träger 5 eine Absatzfläche, auf der die dem Träger 5 zugewandte Seite der Basis 29 aufliegt. Bei dieser Ausführungsform ist die Fügung 39 zwischen Sockel 11 und Träger 5 zwischen der vom Drucksensor 13 abgewandten, dem Träger 5 zugewandten Stirnfläche des zweiten Fortsatzes 49 und der dem Drucksensor 13 zugewandten Bodenfläche der den zweiten Fortsatz 49 aufnehmenden Ausparung 49 vorgesehen.

Alternativ hierzu kann die Basis 29 natürlich auch hier auf einer dem Drucksensor 13 zugewandten Stirnfläche des Trägers angeordnet werden, indem auf die Ausnehmung 41 zur Aufnahme der Basis 29 verzichtet wird und im Träger 5 lediglich die Ausnehmung zur Aufnahme des zweiten Fortsatzes vorgesehen wird. In dem Fall bildet die an die Ausnehmung zur Aufnahme des zweiten Fortsatzes 47 angrenzende Stirnfläche des Trägers eine Absatzfläche, auf der die dem Träger zugewandte Seite der Basis 29 aufliegt.

Diese Ausführungsformen bietet genau wie die in Fig. 2 dargestellte Ausführungsform den Vorteil einer im Vergleich zu dem in Fig. 1 dargestellten Ausführungsbeispiel geringeren Fügefläche der Fügung 39 zwischen Träger 5 und Sockel 11. Darüber hinaus bietet sie bei Relativ- und Differenzdruckmesseinrichtungen den Vorteil, dass der über die Druckübertragungsleitung 21 zum Drucksensor 13 zu übertragende Referenzdruck p_{ref} bzw. der hierüber zum Drucksensor 13 zu übertragende zweite Druck p₂, die Fügung 39 zwischen Sockel 11 und Träger 5 in deutlich geringerem Maße mechanisch belastet, als das bei dem in Fig. 2 dargestellten Ausführungsbeispiel aufgrund der zur Druckübertragungsleitung 21 hin offenen Aussparung 43 der Fall ist. Hierdurch werden durch mechanische Belastungen dieser Fügung 39 bedingte Messfehler reduziert.

Bei allen dargestellten Ausführungsbeispielen bieten als Klebungen ausgebildete Fügungen 33 und/oder 35, 37 bzw. 39 den Vorteil, dass sie deutlich elastischer sind als starre Verbindungen, wie zum Beispiel Einglasungen, Bond-Verbindungen, Lötungen oder Schweißungen, und somit in der Lage sind aufgrund unterschiedlicher thermischer Ausdehnungskoeffizienten von Träger 1, 3 bzw. 5 und Sockel 7, 9 bzw. 11 bzw. von Sockel 7, 9 bzw. 11 und Drucksensor 13 entstehende Spannungen auszugleichen. Die Klebungen bewirken somit eine Reduktion thermomechanischer Spannungen, die sich andernfalls auf den Drucksensor 13, insb. dessen Messmembran 17 auswirken bzw. übertragen würden. Dabei ist die durch die Klebungen bewirkte Reduktion thermomechanischer Spannungen umso größer, je elastischer die Klebungen sind.

Die Festigkeit und die Dichtheit der durch Klebungen bewirkten Fügungen 33, 35, 37 bzw. 39 hängt zum einen von der Wahl des Klebers und zum anderen von der für die jeweilige Fügung 33, 35, 37 bzw. 39 zur Verfügung stehenden Klebefläche ab. Entsprechend wird der zur Herstellung der Klebungen verwendete Kleber vorzugsweise in Abhängigkeit von der zur Verfügung stehenden Klebefläche und den vom Druckmessbereich der Druckmesseinrichtung abhängigen Anforderungen an die Festigkeit ausgewählt. Dabei wird vorzugsweise ein umso elastischerer Kleber eingesetzt wird, je größer die zur Verfügung stehende Klebefläche ist und je geringer die Anforderungen an die Festigkeit sind.

Die Festigkeit von Klebungen ist in der Regel abhängig von der Temperatur und der Richtung in der die Klebungen im Betrieb belastet werden. Insoweit erfordern vom Träger 1, 3 bzw. 5 in Richtung des Drucksensors 13 gerichtete Belastungen der Klebungen eine höhere Festigkeit des Klebers, als in umgekehrter Richtung vom Drucksensor 13 in Richtung des Trägers 1, 3 bzw. 5 wirkende Belastungen, da letztere nicht nur vom Kleber sondern auch vom Träger 1, 3 bzw. 5 abgefangen werden.

Dabei bildet das Elastizitätsmodul des verwendeten Klebers unter der jeweiligen Belastungsrichtung ein Maß für die Festigkeit. So kann es zum Beispiel in Abhängigkeit von den Abmessungen der Komponenten, der Materialwahl und der Größe der Klebefläche in Verbindung mit erfindungsgemäßen Differenzdruckmesseinrichtung oder erfindungsgemäßen Absolut- oder Relativdruckmesseinrichtungen zur Messung von höheren Drücken, insb. Drücken von größer gleich 4 MPa, vorteilhaft sein einen Kleber mit einem Elastizitätsmodul von größer gleich 2000 MPa, insb. einem Elastizitätsmodul im Bereich von 2000 MPa bis 10000 MPa, einzusetzen. Demgegenüber kann es zum Beispiel in Abhängigkeit von den Abmessungen der Komponenten, der Materialwahl und der Größe der Klebefläche in Verbindung mit erfindungsgemäßen Absolut- oder Relativdruckmesseinrichtungen zur Messung von kleineren Drücke, insb. von Drücken kleiner gleich 4 MPa, je nach Größe der Klebefläche vorteilhaft sein einen Kleber mit einem Elastizitätsmodul von kleiner gleich 2000 MPa, insb. einen Elastizitätsmodul im Bereich von 10 MPa bis 1.000 MPa, einzusetzen, wobei in Verbindung mit Absolut- oder Relativdruckmesseinrichtungen zur Messung von kleineren Drücken, insb. von Drücken kleiner gleich 4 MPa, je nach Größe der Klebefläche sogar Kleber mit einem Elastizitätsmodul von kleiner gleich 10 MPa vorteilhaft sein können.

Werden sowohl die Fügung 33 zwischen Drucksensor 13 und Sockel 7, 9 bzw. 11 als auch die Fügung 35, 37 bzw. 39 zwischen Sockel 7, 9 bzw. 11 und Träger 1, 3 bzw. 5 als Klebungen ausgebildet, so bietet das den Vorteil, dass durch das Zusammenwirken der beiden Klebungen auch dann noch eine deutliche Reduktion thermomechanischer Spannungen bewirkt wird, wenn beide Fügungen 33 und 35, 37 bzw. 39 mit einem Kleber mit einem vergleichsweise hohem Elastizitätsmodul ausgeführt werden.

Die Klebungen bieten den Vorteil, dass durch sie nicht nur thermomechanische Spannungen abgebaut werden, sondern darüber hinaus eine große Bandbreite unterschiedlicher Werkstoffe von Sockel 7, 9 bzw. 11 und Träger 1, 3 bzw. 5 bzw. von Sockel 7, 9 bzw. 11 und Drucksensor 13 miteinander verbunden werden können.

Dabei wird für den Träger 1, 3 bzw. 5 im Hinblick auf dessen Druckfestigkeit vorzugsweise ein Werkstoff mit hohem Elastizitätsmodul, und im Hinblick auf dessen vergleichsweise großes Volumen vorzugsweise kostengünstiger Werkstoff, wie zum Beispiel Edelstahl, eingesetzt.

Der Werkstoff des Sockels 7, 9 bzw. 11 kann dann im Hinblick auf die speziellen Anforderungen an die Druckmesseinrichtung aus einer Vielzahl unterschiedlicher Werkstoffe ausgewählt werden. Hierzu zählen Metalle, insb. Edelstahl, Kovar oder Invar, Keramiken, insb. Aluminiumoxid (Al₂O₃), Siliziumcarbid (SiC), Siliziumnitrid (Si₃N₄) oder Aluminiumnitrid (AIN), und Gläser, insb. Borosilikatglas.

Dabei werden für die Messung von Differenzdrücken oder hohen Absolut- oder Relativdrücken, wie z.B. Drücken von größer gleich 4 MPa, vorzugsweise Sockel 7, 9 bzw. 11 aus einem Werkstoff mit hohem Elastizitätsmodul, insb. einem Elastizitätsmodul von größer gleich 200000 MPa eingesetzt. Durch den vergleichsweise hohen Elastizitätsmodul werden vom auf den Sockel 7, 9 bzw. 11 einwirkenden Druck abhängige Einflüsse auf die erzielbare Messgenauigkeit weitgehend vermieden. Hierzu eignen sich insb. Sockel 7, 9 bzw. 11 aus Edelstahl, Kovar, Invar oder aus Keramik, z.B. aus Aluminiumoxid (Al₂O₃), Siliziumcarbid (SiC), Siliziumnitrid (Si₃N₄) oder Aluminiumnitrid (AIN). Zur Messung von niedrigeren Absolut- oder Relativdrücken, wie z.B. Drücken im Bereich von bis zu 4 MPa, können auch Werkstoffe mit geringerem Elastizitätsmodul, wie zum Beispiel Glas, eingesetzt werden.

Darüber hinaus kann über die Wahl eines Isolators als Werkstoff für den Sockel 7, 9 bzw. 11 eine elektrische Isolation des Drucksensors 13 gegenüber dem Träger 1, 3 bzw. 5 bewirkt werden. Eine elektrische Isolation kann zum Beispiel durch einen Sockel 7, 9 bzw. 11 aus Glas, z.B. aus Borosilikatglas, oder Keramik, z.B. aus Aluminiumoxid (Al₂O₃), Siliziumnitrid (Si₃N₄) oder Aluminiumnitrid (AIN), bewirkt werden, wobei für die Messung von Differenzdrücken oder hohen Absolut- oder Relativdrücken, wie z.B. Drücken größer gleich 4 MPa, vorzugsweise Keramik eingesetzt wird, da Keramik einen deutlich höheren Elastizitätsmodul aufweist als Gläser.

Bei Druckmesseinrichtungen, deren Drucksensor 13 ohnehin einen mit dem Sockel 7, 9 bzw. 11 zu verbindenden Membranträger 15 aus einem Isolator, z.B. aus Glas oder Keramik aufweisen, wird eine solche Isolation nicht benötigt.

Zur weiteren Reduktion von sich auf den Drucksensor 13, insb. dessen Messmembran 17 auswirkenden temperaturabhängigen Spannungen besteht der Sockel 7, 9 bzw. 11 vorzugsweise aus einem Werkstoff, der einen an den thermischen Ausdehnungskoeffizienten des Drucksensors 13 angepassten thermischen Ausdehnungskoeffizienten aufweist. Bezogen auf den thermischen Ausdehnungskoeffizienten von Silizium von 2,6 ppm/K eignen sich hierzu insb. Borosilikatgläser, die einen thermischen Ausdehnungskoeffizient in der Größenordnung von 3,2 ppm/K aufweisen. In Druckmesseinrichtungen zur Messung von Differenzdrücken oder höheren Absolut- oder Relativdrücken wird jedoch vorzugsweise ein Werkstoff mit höherem Elastizitätsmodul, wie zum Beispiel Kovar mit einem thermischen Ausdehnungskoeffizienten in der Größenordnung von 5 ppm/K, Invar mit einem thermischen Ausdehnungskoeffizienten in der Größenordnung von 0,55 ppm/K oder Keramik, z.B. Alumiuniumoxid (Al₂O₃) mit einen thermischen Ausdehnungskoeffizienten in der Größenordnung von 8,5 ppm/K, Siliziumcarbid (SiC) mit einem thermischen Ausdehnungskoeffizienten in der Größenordnung von 3,5 ppm/K bis 4,5 ppm/K, Aluminiumnitrid (AIN) mit einem thermischen Ausdehnungskoeffizienten in der Größenordnung von 4 ppm/K bis 5 ppm/K oder Siliziumnitrid(Si₃N₄) mit einem thermischen Ausdehnungskoeffizienten in der Größenordnung von 2,8 ppm/K bis 2,9 ppm/K, ausgewählt.
- 1: Träger
- 3: Träger
- 5: Träger
- 7: Sockel
- 9: Sockel
- 11: Sockel
- 13: Drucksensor
- 15: Membranträger
- 17: Messmembran
- 19: Druckkammer
- 21: Druckübertragungsleitung
- 23: Sensorelemente
- 25: Basis
- 27: Basis
- 29: Basis
- 31: Fortsatz
- 33: Fügung
- 35: Fügung
- 37: Fügung
- 39: Fügung
- 41: Ausnehmung
- 43: Aussparung
- 45: Hohlraum
- 47: zweiter Fortsatz
- 49: Ausnehmung

## Patentansprüche

1. Druckmesseinrichtung, mit
- einem Träger (1, 3, 5), insb. einem Träger (1, 3, 5) aus Metall, insb. aus Edelstahl,
- einem mit dem Träger (1, 3, 5) verbundenen Sockel (7, 9, 11), und
- einem auf einem frei stehenden Ende des Sockels (7, 9, 11) montierten Drucksensor (13), wobei
- der Sockel (7, 9, 11) eine auf dem Träger (1, 3, 5) angeordnete Basis (25, 27, 29) umfasst,
- der Sockel (7, 9, 11) einen sich von der Basis (25, 27 29) in Richtung des Drucksensors (13) erstreckenden, das frei stehende Ende des Sockels (7, 9, 11) umfassenden Fortsatz (31) umfasst, und
- der Fortsatz (31) eine Grundfläche aufweist, die kleiner als eine Grundfläche des darauf montierten Drucksensors (13) ist, **dadurch gekennzeichnet, dass** die Basis (25, 27, 29) eine Grundfläche aufweist, die größer als eine Grundfläche des Fortsatzes (31) ist.

2. Druckmesseinrichtung nach Anspruch 1, **dadurch gekennzeichnet, dass**
- eine dem Träger (1, 3, 5) zugewandte Stirnfläche des Sockels (7, 9, 11), insb. eine dem Träger (1, 3) zugewandte Stirnfläche der Basis (25, 27) oder eine dem Träger (7) zugewandte Stirnfläche eines an die Basis (29) angrenzenden zweiten Fortsatzes (47) des Sockels (11), mittels einer Fügung (35, 37, 39) mit einer dem Sockel (7, 9, 11) zugewandten Stirnfläche des Trägers (1, 3, 5), insb. einer Bodenfläche einer Ausnehmung (41, 49) im Träger (1, 3, 5), verbunden ist, und
- eine dem Drucksensor (13) zugewandte Stirnfläche des Fortsatzes (31) mittels einer Fügung (33) mit einer dem Sockel (7, 9, 11) zugewandten Stirnfläche des Drucksensors (13) verbunden ist.

3. Druckmesseinrichtung gemäß Anspruch 2, **dadurch gekennzeichnet, dass** mindestens eine der Fügungen (33, 35, 37, 39), insb. beide Fügungen (33, 35, 37, 39) Klebungen, insb. mit einem Kleber auf Epoxidharzbasis, einem thermoplastischen Kleber oder einem Silikon-Kleber, insb. einem Silikon-Kautschuk, ausgeführte Klebungen, sind.

4. Druckmesseinrichtung gemäß Anspruch 1, **dadurch gekennzeichnet, dass** die Basis (25, 27, 29)
- im Wesentlichen scheiben- oder ringscheibenförmig ist,
- eine Höhe (H) in der Größenordnung von 0,5 mm bis 10 mm aufweist, und/oder
- eine im Wesentlichen kreisförmige Grundfläche aufweist, deren Außendurchmesser größer als ein Außendurchmesser des Fortsatzes (31) ist und insb. kleiner als 10 mm ist, oder eine im Wesentlichen quadratische oder rechteckige Grundfläche aufweist, deren Seitenlängen größer als ein Außendurchmesser des Fortsatzes (31) sind und insb. kleiner als 10 mm sind.

5. Druckmesseinrichtung gemäß Anspruch 1, **dadurch gekennzeichnet, dass**
- der Fortsatz (31) rohr- oder stabförmig ist, wobei der Fortsatz (31) insb. eine kreis- oder kreisringförmige Grundfläche, insb. ein Grundfläche mit einen Außendurchmesser im Bereich von 0,5 mm bis 5 mm, aufweist, und
- der Fortsatz (31) eine frei stehende Länge aufweist, die größer gleich einer Mindestlänge von wenigen Zehntelmillimetern ist, und insb. in der Größenordnung von 0,5 mm liegt.

6. Druckmesseinrichtung gemäß Anspruch 1, **dadurch gekennzeichnet, dass** eine Druckübertragungsleitung (21) vorgesehen ist,
- die durch den Träger (1, 3, 5) und den Sockel (7, 9, 11) hindurch verläuft,
- über die der Drucksensor (13) mit einem Druck (p₂) oder einem Referenzdruck (p_{ref}) beaufschlagbar ist, und
- die insb. einen Innendurchmesser im Bereich von 0,25 mm bis 1 mm aufweist.

7. Druckmesseinrichtung gemäß Anspruch 1, **dadurch gekennzeichnet, dass** die Basis (25, 27, 29) in eine Ausnehmung (41) im Träger (1, 3, 5) eingesetzt ist.

8. Druckmesseinrichtung gemäß Anspruch 1, **dadurch gekennzeichnet, dass**
- die Basis (27) eine dem Träger (3) zugewandte Stirnfläche aufweist, die mittels einer Fügung (37) mit einer dem Sockel (9) zugewandten Stirnfläche des Trägers (3), insb. einer Bodenfläche einer im Träger (3) vorgesehenen Ausnehmung (41), verbunden ist, und
- in der Basis (27) des Sockels (9) auf deren dem Träger (3) zugewandten Seite eine in der Mitte des Sockels (9) angeordnete, zum Träger (3) hin geöffnete Aussparung (43) vorgesehen ist, insb. eine Aussparung (43), die derart bemessen ist, dass durch sie eine als Fügefläche dienende dem Träger (3) zugewandte Stirnfläche der Basis (27) auf eine für die Erzielung einer ausreichenden Dichtheit und Festigkeit erforderliche Größe reduziert wird.

9. Druckmesseinrichtung gemäß Anspruch 8, **dadurch gekennzeichnet, dass** die Aussparung (43) in einer parallel zur Längsachse des Fortsatzes (31) verlaufenden axialen Richtung eine Höhe (h) von größer gleich 0,2 mm, insb. eine Höhe (h) im Bereich von 0,2 mm bis 0,5 mm, aufweist,

10. Druckmesseinrichtung gemäß Anspruch 8, **dadurch gekennzeichnet, dass**
- sie als Absolutdruckmesseinrichtung ausgebildet ist, wobei die Aussparung (43) entweder im Wesentlichen kreisscheibenförmig ist und einen Außendurchmesser aufweist, der kleiner gleich der Hälfte eines Außendurchmessers oder einer Seitenlänge der Basis (27) ist, oder eine im Wesentlichen quadratische oder rechteckförmige Grundfläche aufweist, deren Seitenlängen kleiner gleich der Hälfte eines Außendurchmessers oder einer Seitenlänge der Basis (27) sind, oder
- eine durch den Träger (3) und den Sockel (9) hindurch verlaufende Druckübertragungsleitung (21) vorgesehen ist und die Aussparung (43) entweder im Wesentlichen kreisscheibenförmig ist und einen Außendurchmesser aufweist, der kleiner gleich der Hälfte der Summe aus dem Innendurchmesser der Druckübertragungsleitung (21) und dem Außendurchmesser oder der Seitenlänge der Basis (27) ist, oder eine im Wesentlichen quadratische oder rechteckförmige Grundfläche aufweist, deren Seitenlängen kleiner gleich der Hälfte der Summe aus dem Innendurchmesser der Druckübertragungsleitung (21) und dem Außendurchmesser oder der Seitenlänge der Basis (27) sind.

11. Druckmesseinrichtung gemäß Anspruch 1 oder 7, **dadurch gekennzeichnet, dass**
- ein Hohlraum (45) vorgesehen ist, der eine Fügung (37) zwischen dem Sockel (9) und dem Träger (3) außenseitlich allseitig umgibt,
- wobei der Hohlraum (45) insb. dadurch gebildet ist, dass eine äußere Mantelfläche der Basis (27) zumindest auf deren dem Träger (3) zugewandten Seite eine eine Querschnittsfläche der Basis (27) in Richtung des Trägers (3) verkleinernde, insb. konisch verjüngende, Formgebung aufweist.

12. Druckmesseinrichtung gemäß Anspruch 1, **dadurch gekennzeichnet,**
**dass**
- der Sockel (11) auf dessen vom Drucksensor (13) abgewandten Seite einen an die Basis (29) anschließenden zweiten Fortsatz (47) umfasst,
- im Träger (5) eine Ausnehmung (49) zur Aufnahme des zweiten Fortsatzes (47) vorgesehen ist,
- die Basis (29) auf einer an die Ausnehmung (49) zur Aufnahme des zweiten Fortsatzes (47) angrenzenden Absatzfläche des Trägers (5) aufliegt, und
- Sockel (11) und Träger (5) über eine zwischen der vom Drucksensor (13) abgewandten, dem Träger (5) zugewandten Stirnfläche des zweiten Fortsatzes (47) und der dem Drucksensor (13) zugewandten Bodenfläche der den zweiten Fortsatz (47) aufnehmenden Ausnehmung (49) vorgesehene Fügung (39) miteinander verbunden sind.

13. Druckmesseinrichtung gemäß Anspruch 1 oder 3, **dadurch gekennzeichnet, dass** der Sockel (7, 9, 11) aus Metall, insb. aus Edelstahl, Invar oder Kovar, aus Siliziumcarbid (SiC), oder aus einem Isolator, insb. aus Keramik, insb. aus Aluminiumoxid (Al₂O₃), Siliziumnitrid (Si₃N₄) oder Aluminiumnitrid (AIN), oder aus Glas, insb. aus Borosilikatglas, besteht.

14. Druckmesseinrichtung nach Anspruch 1, **dadurch gekennzeichnet, dass** der Sockel (7, 9, 11) aus einem Werkstoff besteht, der einen an den thermischen Ausdehnungskoeffizienten des Drucksensors (13) angepassten thermischen Ausdehnungskoeffizienten aufweist.

15. Druckmesseinrichtung nach Anspruch 1, **dadurch gekennzeichnet, dass**
- die Druckmesseinrichtung eine Differenzdruckmesseinrichtung oder eine Absolut- oder Relativdruckmesseinrichtung zur Messung von höheren Drücken, insb. Drücken von größer gleich 4 MPa ist, und
- der Sockel (7, 9, 11) aus einem Werkstoff, insb. aus Edelstahl, Invar, Kovar oder Keramik, insb. aus Aluminiumoxid (Al₂O₃), Siliziumnitrid (Si₃N₄), Siliziumcarbid (SiC) oder Aluminiumnitrid (AIN), besteht, der einen Elastizitätsmodul von größer gleich 200000 MPa aufweist.

## Claims

1. Pressure measuring device, with
- a support (1, 3, 5), particularly a support (1, 3, 5) made of metal, particularly stainless steel,
- a stand (7, 9, 11) connected to the support (1, 3, 5), and
- a pressure sensor (13) mounted on a free-standing end of the stand (7, 9, 11), wherein
- the stand (7, 9, 11) comprises a base (25, 27, 29) arranged on the support (1, 3, 5),
- the stand (7, 9, 11) comprises an extension (31) extending from the base (25, 27, 29) in the direction of the pressure sensor (13) and comprising the free-standing end of the stand (7, 9, 11), and
- the extension (31) has a surface area that is smaller than a surface area of the pressure sensor (13) mounted thereon, **characterized in that** the base (25, 27, 29) has a surface area which is greater than a surface area of the extension (31).

2. Pressure measuring device as claimed in Claim 1, **characterized in that**
- a front face of the stand (7, 9, 11) facing towards the support (1, 3, 5), particularly a front face of the base (25, 27) facing towards the support (1, 3) or a front face, facing towards the support (7), of a second extension (47) of the base, said extension being adjacent to the base (29), is connected, by means of a joint (35, 37, 39), to a front face of the support (1, 3, 5) facing towards the stand (7, 9, 11), particularly a ground area of a recess (41, 49) in the support (1, 3, 5), and
- a front face of the extension (31) facing towards the pressure sensor (13) is connected, by means of a joint (33), to a front face of the pressure sensor (13) facing towards the stand (7, 9, 11).

3. Pressure measuring device as claimed in Claim 2, **characterized in that** at least one of the joints (33, 35, 37, 39), particularly the two joints (33, 35, 37, 39), are bonded joints, particularly bonded joints implemented using an adhesive on an epoxy resin basis, a thermoplastic adhesive or a silicone adhesive, particularly a silicone rubber.

4. Pressure measuring device as claimed in Claim 1, **characterized in that** the base (25, 27, 29)
- is essentially in the shape of a disk or annular disk
- has a height (H) in the range from 0.5 mm to 10 mm, and/or
- has an essentially circular surface area whose outer diameter is greater than an outer diameter of the extension (31) and is particularly less than 10 mm, or has an essentially square or rectangular surface area whose side lengths are greater than an outer diameter of the extension (31) and are particularly less than 10 mm.

5. Pressure measuring device as claimed in Claim 1, **characterized in that**
- the extension (31) is in the form of a tube or rod, wherein the extension (31) particularly has a circular or annular surface area, particularly a surface area with an outer diameter in the range between 0.5 mm and 5 mm, and
- the extension (31) has a free-standing length greater than or equal to a minimum length of a few tenths of a millimeter, and particularly in the range of 0.5 mm.

6. Pressure measuring device as claimed in Claim 1, **characterized in that** a pressure transmission line (21) is provided,
- which passes through the support (1, 3, 5) and the stand (7, 9, 11),
- by means of which the pressure sensor (13) can be exposed to a pressure (p₂) or a reference pressure (pref), and
- which particularly has an inner diameter ranging between 0.25 mm and 1 mm.

7. Pressure measuring device as claimed in Claim 1, **characterized in that** the base (25, 27, 29) is inserted into a recess (41) of the support (1, 3, 5).

8. Pressure measuring device as claimed in Claim 1, **characterized in that**
- the base (27) has a front face facing towards the support (3), said front face being connected, by means of a joint (37), to a front face of the support (3) facing towards the stand (9), particularly to a ground area of a recess (41) provided in the support (3), and
- in the base (27) of the stand (9) - on a side facing towards the support (3) - a recess (43) is provided which is arranged in the center of the stand (9) and is open in the direction of the support (3), particularly a recess (43) which is sized in such a way that - due to the recess - a front face of the base (27) facing towards the support (3) and acting as a joint surface is reduced to a size that is necessary to obtain sufficient sealing and strength.

9. Pressure measuring device as claimed in Claim 8, **characterized in that** in an axial direction parallel to the longitudinal axis of the extension (31), the recess (43) has a height (h) greater than or equal to 0.2 mm, particularly a height (h) ranging between 0.2 mm and 0.5 mm.

10. Pressure measuring device as claimed in Claim 8, **characterized in that**
- said device is designed as an absolute pressure measuring device, wherein the recess (43) is either essentially disk-shaped and has an outer diameter less than or equal to half an outer diameter or a side length of the base (27), or the recess (43) has a surface area which is essentially square or rectangular and whose side lengths are less than or equal to half an outer diameter or a side length of the base (27), or
- a pressure transmission line (21) is provided which extends through the support (3) and the stand (9), and the recess (43) is essentially disk-shaped and has an outer diameter less than or equal to half of the sum of the inner diameter of the pressure transmission line (21) and the outer diameter or the side length of the base (27), or wherein the recess (43) has a surface area that is essentially square or rectangular whose side lengths are less than or equal to half the sum of the inner diameter of the pressure transmission line (21) and the outer diameter or the side length of the base (27).

11. Pressure measuring device as claimed in Claim 1 or 7, **characterized in that**
- a cavity (45) is provided which surrounds a joint (37) between the stand (9) and the support (3) along all sides on the outside,
- wherein the cavity (45) is formed particularly **in that** an outer lateral surface of the base (27) has - at least on the side facing towards the support (3) - a shape which reduces, particularly tapers, a cross-section surface of the base (27) in the direction of the support (3).

12. Pressure measuring device as claimed in Claim 1, **characterized in that**
- the base (11) comprises, on the side facing away from the pressure sensor (13), a second extension (47) following on from the base (29),
- a cavity (49) is provided in the support (5) to receive the second extension (47),
- the base (29) rests on a rest surface of the support (5) adjacent to the recess (49) which is designed to receive the second extension (47), and
- the base (11) and the support (5) are interconnected by means of a joint (39) provided between the front face of second extension (47), facing away from the pressure sensor (13) and facing towards the support (5), and the ground area of the recess (49) receiving the second extension (47) and facing towards the pressure sensor (13).

13. Pressure measuring device as claimed in Claim 1 or 3, **characterized in that** the stand (7, 9, 11) is made from a metal, particularly stainless steel, Invar or Kovar, silicon carbide (SiC), or an isolator, particularly ceramic, particularly aluminum oxide (Al₂O₃), silicon nitride (Si₃N₄) or aluminum nitride (AIN), or glass, particularly borosilicate glass.

14. Pressure measuring device as claimed in Claim 1, **characterized in that** the stand (7, 9, 11) is made from a material that has a thermal expansion coefficient that is adapted to the thermal expansion coefficient of the pressure sensor (13).

15. Pressure measuring device as claimed in Claim 1, **characterized in that**
- the pressure measuring device is a differential pressure measuring device or an absolute or gauge pressure measuring device, which is designed to measure higher pressures, particularly pressures greater than or equal to 4 MPa, and
- the stand (7, 9, 11) is made from a material, particularly stainless steel, Invar, Kovar or ceramic, particularly aluminum oxide (Al₂O₃), silicon nitride (Si₃N₄), silicon carbide (SiC) or aluminum nitride (AIN), wherein said material has an elasticity module greater than or equal to 200 000 MPa.

## Revendications

1. Dispositif de mesure de pression, avec
- un support (1, 3, 5), notamment un support (1, 3, 5) en métal, notamment en acier inoxydable,
- un socle (7, 9, 11) relié au support (1, 3, 5), et
- un capteur de pression (13) monté sur une extrémité libre du socle (7, 9, 11), dispositif pour lequel
- le socle (7, 9, 11) comprend une base (25, 27, 29) disposée sur le support (1, 3, 5),
- le socle (7, 9, 11) comprend un prolongement (31) s'étendant depuis la base (25, 27, 29) en direction du capteur de pression (13) et comprenant l'extrémité libre du socle (7, 9, 11), et
- le prolongement (31) présente une surface de base qui est plus petite qu'une surface de base du capteur de pression (13) monté sur celle-ci, **caractérisé en ce que** la base (25, 27, 29) présente une surface de base qui est plus grande qu'une surface de base du prolongement (31).

2. Dispositif de mesure de pression selon la revendication 1, **caractérisé en ce que**
- une face d'extrémité du socle (7, 9, 11) faisant face au support (1, 3, 5), notamment une face d'extrémité de la base (25, 27) faisant face au support (1, 3) ou une face d'extrémité, faisant face au support (7), d'un deuxième prolongement (47) du socle, lequel prolongement est adjacent à la base (29), est reliée au moyen d'un joint (35, 37, 39) à une face d'extrémité du support (1, 3, 5) faisant face à la base (7, 9, 11), notamment une surface inférieure d'un évidement (41, 49) dans le support (1, 3, 5), et
- une face d'extrémité du prolongement (31) faisant face au capteur de pression (13) est reliée au moyen d'un joint (33) à une face d'extrémité du capteur de pression (13) faisant face au socle (7, 9, 11).

3. Dispositif de mesure de pression selon la revendication 2, **caractérisé en ce qu'**au moins l'un des joints (33, 35, 37, 39), notamment les deux joints (33, 35, 37, 39), sont des collages, notamment des collages réalisés avec une colle à base de résine époxy, une colle thermoplastique ou une colle silicone, notamment un caoutchouc silicone.

4. Dispositif de mesure de pression selon la revendication 1, **caractérisé en ce que** la base (25, 27, 29)
- se présente pour l'essentiel sous la forme d'un disque ou d'un disque annulaire
- présente une hauteur (H) de l'ordre de 0,5 mm à 10 mm, et/ou
- présente une surface de base pour l'essentiel circulaire, dont le diamètre extérieur est supérieur à un diamètre extérieur du prolongement (31) et est notamment inférieur à 10 mm, ou présente une surface de base pour l'essentiel carrée ou rectangulaire, dont les longueurs des côtés sont supérieures à un diamètre extérieur du prolongement (31) et sont notamment inférieures à 10 mm.

5. Dispositif de mesure de pression selon la revendication 1, **caractérisé en ce que** le prolongement (31) est en forme de tube ou de tige, le prolongement (31) présentant notamment une surface de base circulaire ou annulaire, notamment une surface de base avec un diamètre extérieur compris entre 0,5 mm et 5 mm, et
- le prolongement (31) présente une longueur libre supérieure ou égale à une longueur minimale de quelques dixièmes de millimètres, et notamment de l'ordre de 0,5 mm.

6. Dispositif de mesure de pression selon la revendication 1, **caractérisé en ce qu'**est prévue une conduite de transmission de pression (21),
- laquelle traverse le support (1, 3, 5) et le socle (7, 9, 11),
- par l'intermédiaire de laquelle le capteur de pression (13) peut être sollicité par une pression (p₂) ou une pression de référence (p_{ref}), et
- laquelle présente notamment un diamètre intérieur compris entre 0,25 mm et 1 mm.

7. Dispositif de mesure de pression selon la revendication 1, **caractérisé en ce que** la base (25, 27, 29) est insérée dans un évidement (41) du support (1, 3, 5).

8. Dispositif de mesure de pression selon la revendication 1, **caractérisé en ce que**
- la base (27) présente une face d'extrémité faisant face au support (3), laquelle face d'extrémité est reliée au moyen d'un joint (37) à une face d'extrémité du support (3) faisant face au socle (9), notamment à une surface inférieure d'un évidement (41) prévu dans le support (3), et
- dans la base (27) du socle (9), sur son côté tourné vers le support (3), il est prévu un évidement (43) disposé au centre du socle (9) et ouvert en direction du support (3), notamment un évidement (43) qui est dimensionné de telle sorte que, grâce à lui, une face d'extrémité de la base (27) faisant face au support (3) et servant de surface de joint est réduite à une taille qui est nécessaire pour obtenir une étanchéité et une résistance suffisantes.

9. Dispositif de mesure de pression selon la revendication 8, **caractérisé en ce que** l'évidement (43) présente, dans une direction axiale parallèle à l'axe longitudinal du prolongement (31), une hauteur (h) supérieure ou égale à 0,2 mm, notamment une hauteur (h) comprise entre 0,2 mm et 0,5 mm.

10. Dispositif de mesure de pression selon la revendication 8, **caractérisé en ce**
- **que** ledit dispositif est conçu comme un dispositif de mesure de pression absolue, l'évidement (43) étant soit pour l'essentiel en forme de disque et présentant un diamètre extérieur inférieur ou égal à la moitié d'un diamètre extérieur ou d'une longueur latérale de la base (27), ou l'évidement (43) présentant une surface de base pour l'essentiel carrée ou rectangulaire, dont les longueurs latérales sont inférieures ou égales à la moitié d'un diamètre extérieur ou d'une longueur latérale de la base (27), ou
- **qu'**il est prévu une conduite de transmission de pression (21), laquelle conduite s'étend à travers le support (3) et le socle (9), et l'évidement (43) étant soit pour l'essentiel en forme de disque et présentant un diamètre extérieur inférieur ou égal à la moitié de la somme du diamètre intérieur de la conduite de transmission de pression (21) et du diamètre extérieur ou de la longueur latérale de la base (27), ou l'évidement (43) présentant une surface de base pour l'essentiel carrée ou rectangulaire, dont les longueurs latérales sont inférieures ou égales à la moitié de la somme du diamètre intérieur de la conduite de transmission de pression (21) et du diamètre extérieur ou de la longueur latérale de la base (27).

11. Dispositif de mesure de pression selon la revendication 1 ou 7, **caractérisé en ce**
- **qu'**est prévue une cavité (45) qui entoure un joint (37) entre le socle (9) et le support (3) à l'extérieur sur tous les côtés,
- la cavité (45) est formée notamment en ce qu'une surface latérale extérieure de la base (27) présente, au moins sur son côté faisant face au support (3), une forme qui réduit une superficie de section de la base (27) en direction du support (3), notamment une forme qui se rétrécit de manière conique.

12. Dispositif de mesure de pression selon la revendication 1, **caractérisé en ce que**
- le socle (11) comprend, sur son côté opposé au capteur de pression (13), un deuxième prolongement (47) attenant à la base (29),
- une cavité (49) est prévue dans le support (5) pour recevoir le deuxième prolongement (47),
- la base (29) repose sur une surface d'épaulement du support (5) adjacente à l'évidement (49), lequel évidement est destiné à recevoir le deuxième prolongement (47), et
- le socle (11) et le support (5) sont reliés l'un à l'autre par l'intermédiaire d'un joint (39) prévu entre la surface d'extrémité du deuxième prolongement (47), opposée au capteur de pression (13) et faisant face au support (5), et la surface inférieure de l'évidement (49) recevant le deuxième prolongement (47) faisant face au capteur de pression (13).

13. Dispositif de mesure de pression selon la revendication 1 ou 3, **caractérisé en ce que** le socle (7, 9, 11) est constitué de métal, notamment d'acier inoxydable, d'Invar ou de Kovar, de carbure de silicium (SiC), ou d'un isolant, notamment de céramique, notamment d'oxyde d'aluminium (Al₂O₃), de nitrure de silicium (Si₃N₄) ou de nitrure d'aluminium (AIN), ou de verre, notamment de verre borosilicaté.

14. Dispositif de mesure de pression selon la revendication 1, **caractérisé en ce que** le socle (7, 9, 11) est constitué d'un matériau présentant un coefficient de dilatation thermique adapté au coefficient de dilatation thermique du capteur de pression (13).

15. Dispositif de mesure de pression selon la revendication 1, **caractérisé en ce que**
- le dispositif de mesure de pression est un dispositif de mesure de pression différentielle ou un dispositif de mesure de pression absolue ou relative, destiné à la mesure de pression élevées, notamment des pressions supérieures ou égales à 4 MPa, et
- le socle (7, 9, 11) est constitué d'un matériau, notamment en acier inoxydable, en Invar, en Kovar ou en céramique, notamment en oxyde d'aluminium (Al₂O₃), en nitrure de silicium (Si₃N₄), en carbure de silicium (SiC) ou en nitrure d'aluminium (AIN), lequel matériau présente un module d'élasticité supérieur ou égal à 200 000 MPa.
